# EUROPEAN PATENT SPECIFICATION

(11) **EP 3 210 504 B1**
(45) Date of publication and mention of the grant of the patent: **26.02.2020**
(21) Application number: 15790697.5
(22) Date of filing: 05.10.2015
(51) Int. Cl.: A47J 31/44, A47J 31/36

(54) **EXTRACTION DEVICE DESIGNED FOR SINGLE DOSE PORTIONS, BEVERAGE PREPARATION MACHINE HAVING SAID EXTRACTION DEVICE AND BEVERAGE PREPARATION PROCESS**
EXTRAKTIONSVORRICHTUNG FÜR EINZELDOSISPORTIONEN, GETRÄNKEZUBEREITUNGSMASCHINE MIT DIESER EXTRAKTIONSVORRICHTUNG UND GETRÄNKEZUBEREITUNGSVERFAHREN
DISPOSITIF D'EXTRACTION ADAPTÉ POUR DES PORTIONS DE DOSES INDIVIDUELLES, MACHINE DE PRÉPARATION DE BOISSONS PRÉSENTANT LEDIT DISPOSITIF D'EXTRACTION ET PROCÉDÉ DE PRÉPARATION DE BOISSONS

(30) Priority: 21.10.2014 PT 10798014
(43) Date of publication of application: 30.08.2017
(73) Proprietor: WEADD, LDA, 2430-028 Marinha Grande (PT)
(72) Inventor: FREIRE FALCÃO TELES CARAMELO, Daniel, P-1700-141 Lisboa (PT); QUITÉRIO GARCIA CARVALHO, Agostinho Miguel, 2400-441 Leiria (PT)
(74) Representative: Zimmermann, Tankred Klaus
(86) International application number: PCT/PT2015/000046
(87) International publication number: WO 2016/064290

(56) References cited:
- EP-A1- 2 689 698
- CN-U- 203 468 345
- US-A1- 2006 037 483

## Description

### Field of the invention

The present invention refers to the field of beverage preparation machines by means of extraction, in particular machines comprising extraction devices adapted for processing single dose portions and providing a draw-like movement.

The present invention further refers to a beverage preparation machine comprising at least one extraction device that provides a draw-like movement, as well as to a beverage preparation process based upon such extraction device.

### Background invention

The prior art includes many solutions of extraction devices adapted for extraction of a single dose portion or package and configured to be part of beverage preparation machines.

Typically, said extraction devices present collection means of a single dose portion or package, and displacement means of said collection means between an open position and a closed position. In most of the extraction devices, there are further provided supply means of extraction fluid and collection means of the resulting beverage, in particular in liquid tight conditions. The known solutions vary in the configuration of the constructive element and movement transmission means. In general, there are solutions where said single dose package is supplied to a first position and is then moved, including in a translation and/or rotation movement, to a second closed position.

Document US 4,709,625 discloses an extraction device that presents collection means of single dose portions and adapted so as to provide a basic draw-like movement.

Document EP 1327407 B1 discloses an extraction device of a substance that provide a sliding movement between a position for loading a substance, a washing position and an infusion position.

Documents EP 1820428 B1, US 2006/ 0037483 A1 e EP 1559352 B1 also disclose related extraction devices.

Documents CN 203468345 U and EP 2689698 A1 both disclose relative compact extraction devices for coffee capsules of the type of the present invention, each presenting a first part in a general box-like form, a second part provided in a general lid-like form and a third part provided in a general framework-like form. However, both of said documents disclose different mechanisms for transmitting movement between these parts, presenting higher construction complexity. Neither provides for a translation movement, in a drawer-like arrangement, of one of the device parts relative to other, between an open position and a closed position, and vice-versa. Both documents provide for a swivelling mechanism comprising curved guiding pieces that engage movably in two substantially straight guiding opening.

### General description of the invention

The objective of the present invention is to provide an extraction device adapted for collecting a single dose package of an edible substance, including in the form of a substantially rigid capsule and substantially flexible pod, adapted so as to provide an extraction of said edible substance and thus supply a resulting edible product, and presenting a more simple construction and more reliable operation means.

Said objective is solved according to claim 1.

In particular, said objective is solved according to the present invention by means of an extraction device adapted for collecting single dose portions containing at least one edible substance and comprising a first part provided in a box-like or similar general form, adapted so that can be moved along a translation movement between an open position and a closed position, and vice-versa, and presenting collection means disposed in a distal edge zone and configuring a space for collecting one said single dose portion through an admission side of said first part, a second part provided in a lid-like general form of said admission side of said first part, adapted so that can be moved along a rotation movement between an un-blocked position corresponding to said open position and a blocking position corresponding to said closed position, and vice-versa, and presenting a closing zone for closing said collection means, a third part provided fixed in framework-like or similar general form, so that can collect at least part of said first and second part, whereby, according to a first inventive aspect, said first part presents first translation means that provide engagement paths adapted for mobile engagement of translation engagement means provided in said second part, whereby said engagement paths are disposed in opposing side faces of said first part and developing in oblique manner relative to the direction of said translation movement, distancing from said admission side of said first part along the direction of the distal edge thereof, so as to provide a rotation movement of said second part relative to said first part, whereby said rotation movement of said second part develops gradually between said un-blocking position and said blocking position as said translation movement develops between said open position and said closed position, and vice-versa.

The extraction group according to the present invention, presents simple and reliable collection and retention means. According to a preferred embodiment, said collection means are provided in a basket-like form, or part of basket, adapted so as to retain at least par of the envelope of a single dose portion. According to another preferred embodiment, said second part presents a closing zone configured with a form and dimension substantially corresponding to the form and dimension of the space defined by said collection means, so as to close this space in liquid tight manner when in a closed position de forma. According to a preferred embodiment, said closing zone of said second part presents blocking means of said blocking position, including hook-like and similar. Moreover, said retention means present retention elements adapted so as to retain said single dose portion in two opposing locations of said collection means.

The extraction group presents a compact form. According to a preferred embodiment, said first part and second part present a similar extension at least along the longitudinal direction, preferentially also along the cross direction at least in the respective distal zone. According to a preferred embodiment, said third part is adapted so that at least partially contains said first part and second part. According to another preferred embodiment, said second part extends along at least part, preferentially the entire surface of said first part that includes the admission side adapted for supply of a single dose portion to said collection means.

The extraction group presents auxiliary means of simple movement. According to a preferred embodiment, said third part presents two elastic means of helix string type or similar, disposed in the proximity of said second translation means and developing, when not tensioned, along at least part, preferentially at least most part, of the longitudinal extension of said third part. According to a preferred embodiment, said first part presents string engagement means adapted so as to collect at least part of the extension of said elastic means.

Another objective of the present invention is to provide a beverage preparation machine of less construction complexity and more compact dimension, including at least one extraction device adapted for extraction of a single dose portion.

Said objective is solved according to claim 10.

According to another preferred embodiment, the extraction device is disposed in said machine so that a first part can displace along a substantially horizontal direction relative to the machine housing or along a vertical direction relative to the machine housing, preferentially so that the fluid flow injection means are disposed on the inwards facing side or on the upwards facing side of the machine.

According to another preferred embodiment, said extraction device is adapted so that said single dose portions are introduced into said extraction device along an entry direction through an admission side, and exit from said extraction device along an exit direction perpendicular to said entry direction.

Another objective of the present invention is to provide a process for preparing beverages based upon a beverage preparation machine including at least one extraction device adapted for single dose portions, and that provides a draw-like movement.

Said objective is solved according to claim 13.

### Description of the Figures

The invention shall hereinafter be explained in greater detail based upon preferred embodiment and in the Figures that are attached.

The Figures show:
- Figure 1:: perspective views of a front side (on the left) and of a posterior side (on the right) of a first embodiment of an extraction device (1) according to the present invention in an open position (A);
- Figure 2:: views similar to those of Figure 1, of an extraction device (1) according to the present invention, in a closed position (B);
- Figure 3:: front side view (on the left) presenting a longitudinal cut-plane X-X, and cut view (on the right) along plane X-X, of the embodiment according to Figure 1, in an open position (A) ;
- Figure 4:: front view (on the left) presenting a longitudinal cut-plane X-X, and cut view (on the right) along plane X-X, of the embodiment according to Figure 1, in a closed position (B) ;
- Figure 5:: side views of the extraction device (1) including a single dose portion (10), in an open position (A) (on the left) and a closed position (B);
- Figure 6:: cut views according to said longitudinal cut plane X-X, of the extraction device (1) including a single dose portion (10), in an open position (A) (on the left) and a closed position (B);
- Figure 7:: cut views according to said longitudinal cut plane X-X, of the extraction device (1) including a single dose portion (10), in two successive discharge moments of a single dose portion (10);
- Figure 8:: perspective views of a front side (on the left) and of a posterior side (on the right) only of the first part (2) of the extraction device (1) according to Figure 1;
- Figure 9:: front view (on the left) presenting a longitudinal cut plane X-X, and cut view (on the right) along plane X-X, only of the first part (2) of the extraction device (1) according to Figure 1;
- Figure 10:: perspective views of a front side (on the left) and of a posterior side (on the right) only of the second part (3) of the extraction device (1) according to Figure 1;
- Figure 11:: front view (on the left) presenting a longitudinal cut plane X-X, and cut view (on the right) along plane X-X, only of the second part (3) of the extraction device (1) according to Figure 1;
- Figure 12:: perspective views of a front side (on the left) and of a posterior side (on the right) only of the third part (4) of the extraction device (1) according to Figure 1;
- Figure 13:: front view (on the left) presenting a longitudinal cut plane X-X, and cut view (on the right) along plane X-X, only of the third part (4) of the extraction device (1) according to Figure 1;
- Figure 14:: perspective views of a front side (on the left) and of aside posterior (on the right) of a second embodiment of an extraction device (1) according to the present invention in an open position (A);
- Figure 15:: front view (on the left) presenting a longitudinal cut plane X-X, and cut view (on the right) along plane X-X, of the embodiment according to Figure 14 in an open position (A) ;
- Figure 16:: front and detail views (on the left) of a retention element in an extraction device (1) according to the present invention;
- Figure 17:: schematic representation of a first embodiment of a machine (11) for preparing beverages according to the present invention, comprising an extraction device (1);
- Figure 18:: schematic representation of a second embodiment of a machine (11) for preparing beverages according to the present invention, comprising an extraction device (1).

### Description of preferred embodiments of the invention

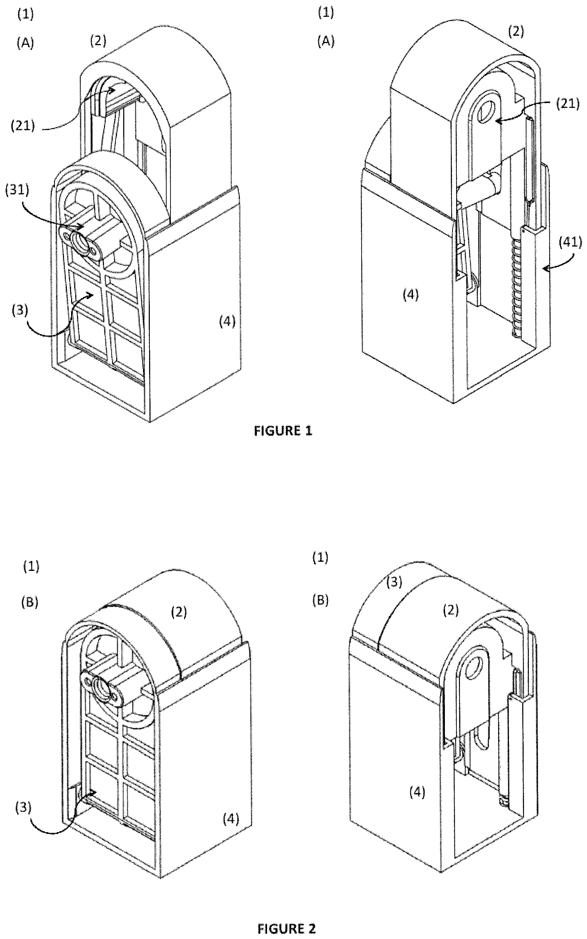

**Figures 1** and **2** represent a first embodiment of an extraction device (1) according to the present invention in an open position (A) - Figure 1 - where it can receive a single dose portion (10), and in a closed position (B) - Figure 2 -, where it can inject a fluid into the confined collection space of said single dose portion (10) so as to cross through the latter and thereby collect a respective beverage, respectively.

The extraction device (1) basically comprises three parts (2, 3, 4) provided so as to engage each other in such a way that can carry out a basic draw-like movement, including a translation movement of a first part (2) forward and back, along a longitudinal direction of said extraction device (1), and a rotation movement around a cross direction of a second part (3) approaching and distancing apart the latter relative to said first part (2), so as to close a face of at least part of said first part (2), that is, the admission side (20) of said single dose portions (10), in particular so as to close at least the collection means (21) of said first part (2).

In the case of the represented embodiment, said first part (2) and second part (3) present a similar extension at least along the longitudinal direction, preferentially also along the cross direction at least in a respective distal zone. According to another preferred embodiment, said third part (4) is adapted so that contains at least partially said first part (2) and second part (3). According to another preferred embodiment, said second part (3) extends along at least part, preferentially the entire surface of said first part (2) that includes the admission side (20) adapted for supply of said single dose portion (10) to said collection means (21).

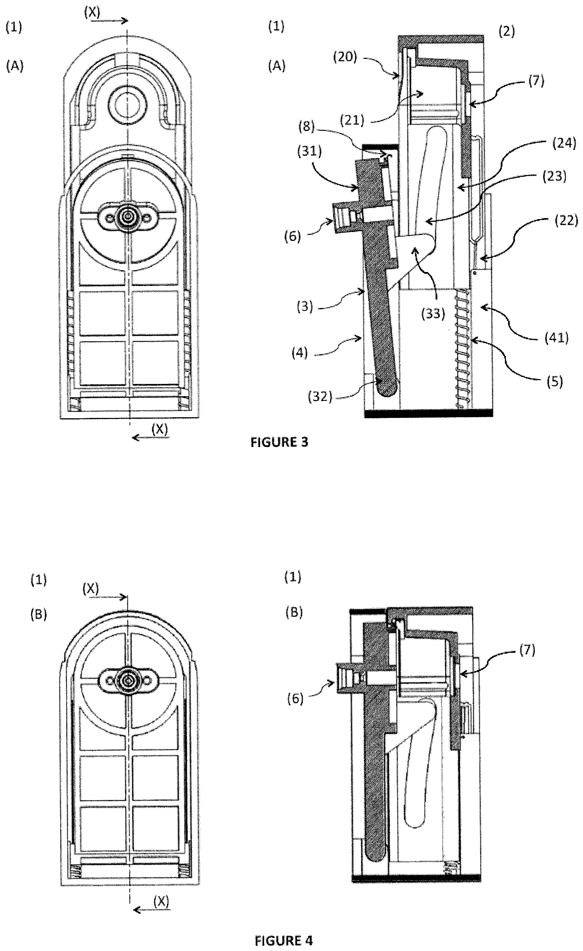

**Figures 3** and **4** present views of the engagement of said three parts (2, 3, 4) when in an open position (A) ad in a closed position (B), respectively.

A first part (2) in a general box-like or similar form, movable in a translation movement between an open position (A) and a closed position (B), and vice-versa, as shall be described in greater detail further below, presenting collection means (21) disposed in a distal edge zone and configured for collection of one said single dose portion (10) through an admission side (20) of said first part (2).

In the case of the represented embodiment, said collection means (21) are provided in the form of a cylindrical or frusto-conic form, preferentially adapted so as to retain the form of the respective of capsule or pod of single dose portion (10).

The extraction device (1) further includes a second part (3) provided in a general lid-like form of said admission side (20) of said first part (2), and movable in a rotation movement between a blocking position (D) corresponding to said closed position (B) and an un-blocking position (C) corresponding to said open position (A), and vice-versa, and presenting a closing zone (31) adapted for closing said collection space (21).
in the case of the first embodiment, said closing zone (31) presents fluid injection means, including under a pressure greater than the atmospheric pressure.

The extraction device (1) further presents a third part (4) provided fixed, for example in fixed engagement with a machine (11) for preparing beverages - not represented - and in a general framework-like or similar form, so as to collect, said first part (2) and second part (3).

According to a preferred embodiment, said first (2), second (3) and third (4) parts of the extraction device (1) are provided so that, when in a closed position (B), jointly form a construction unit with a substantially continuous outside surface.

According to a first inventive aspect, said first part (2) presents first translation means (23) that provide engagement paths for corresponding first engagement means (33) of said second part (3), whereby said engagement paths are disposed in opposing side faces of said first part (2) and develop in oblique manner relative to the direction of said translation movement, distancing apart from said admission side (20) of said first part (2) along the direction of the distal region thereof. The actuation of said first part (2) in mobile engagement with said second part (3), thereby provides a rotation movement of said second part (3) relative to said first part (2), whereby said rotation movement of said second part (3) gradually develops between said un-blocking position (C) and said blocking position (D) as said translation movement develops between said open position (A) and said closed position (B), and vice-versa.

According to a preferred embodiment, said first translation means (23) of said first part (2) present engagement paths with an inclination of at least 2°, preferentially of at least 5°, relative to the longitudinal direction and are provided between the proximity of said collection means (21) and a distal zone of said first part (2). This configuration advantageously results so as to reduce the general dimensions of the extraction device (1) according to the invention.

According to another preferred embodiment, said first engagement means (33) of said second part (3) are provided as projections, including of cylindrical type or similar, adapted for mobile engagement in translation, including by means of positive union, with the corresponding first translation engagement means (23) provided in opposing side of two interior faces of said first part (2), developing along respective engagement paths provided as opening or cavity, including of the groove-type or similar.

As one can further observe in Figure 4, by means of actuating said first part (2) along a translation movement, in this case in a downwards vertical direction, said first part (2) drives said second part (2) in a rotation movement in approach to the admission side (20) of said first part (2) so that results fixed in a blocking position (D) where said closing means (31) block close the space defined by said collection means (21), whereby this blocking position (D) corresponds to the closed position (B) of said extraction device (1). In this position, the fluid flow can be injected through said injection means (6), so as to flow through the single dose portion (10) (not represented), and the resulting beverage collected through the discharge means (7).

Said rotation movement of said second part (3) thus results from the engaged movement in respective first engagement means (33), provided in the form of engagement paths in said first part (2), and the engagement movement in respective rotation means (42) provided in said third part (4).

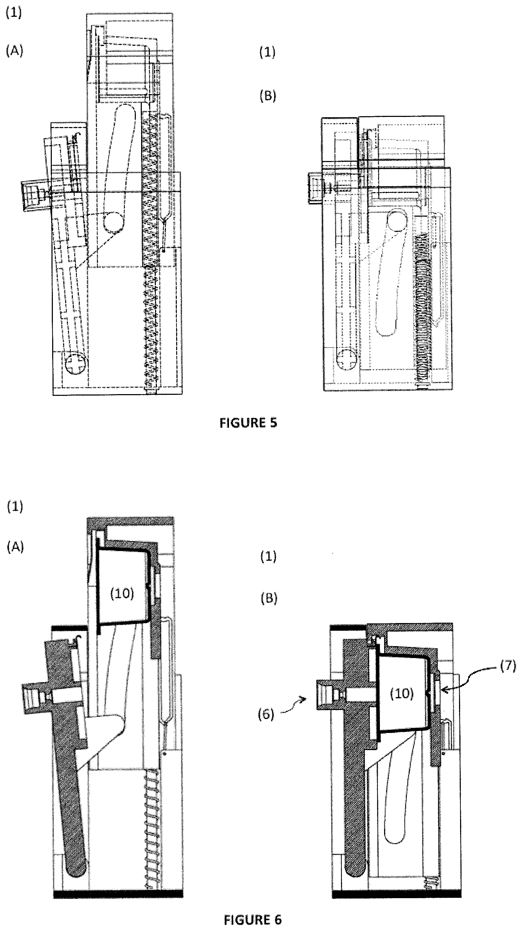

**Figures 5** and **6** illustrate said translation movement of said first part (2) between an open position (A) and a closed position (B), and said rotation movement of said second part (3) between an un-blocking position (C) and a blocking position (D). In this position, there can be started the fluid flow injection into the single dose portion (10) collected in the space defined by said collection means (21) of said extraction device (1).

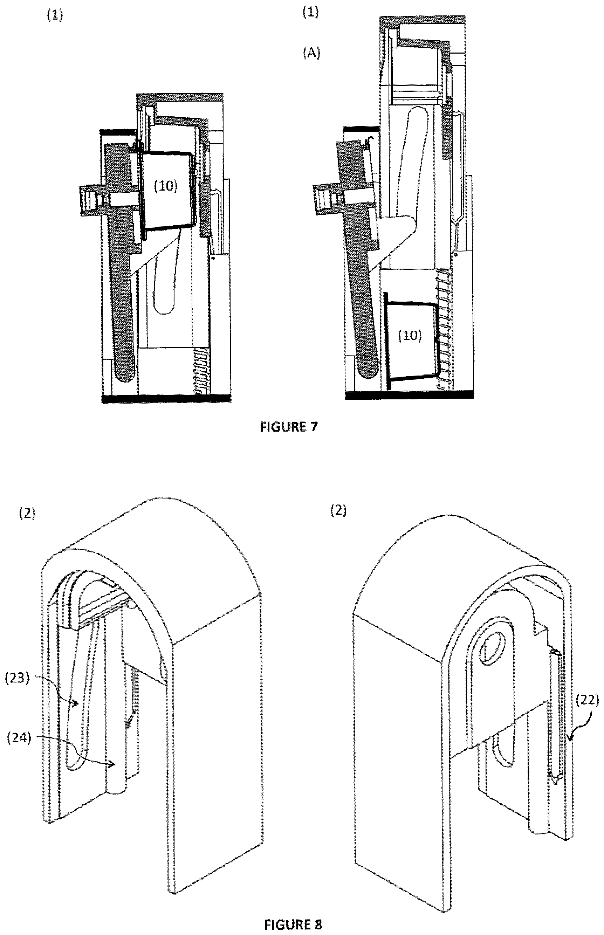

**Figure 7** illustrates the step of ejection of said single dose portion (10) out of the extraction device (1).

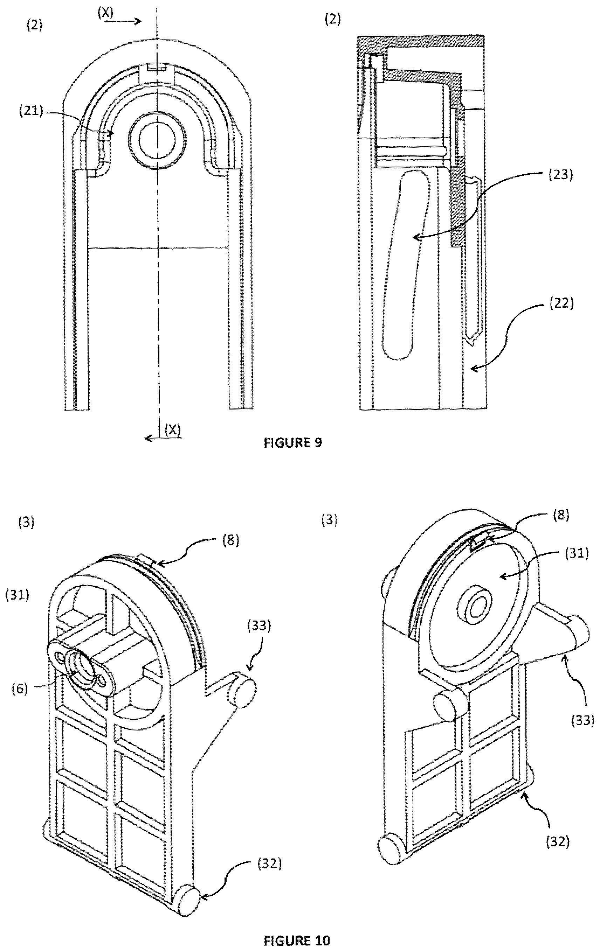

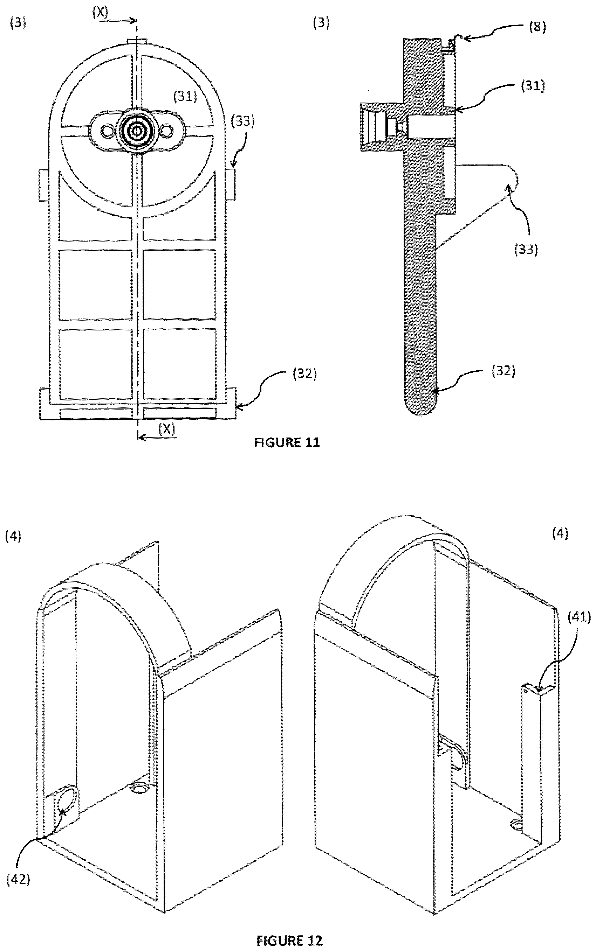

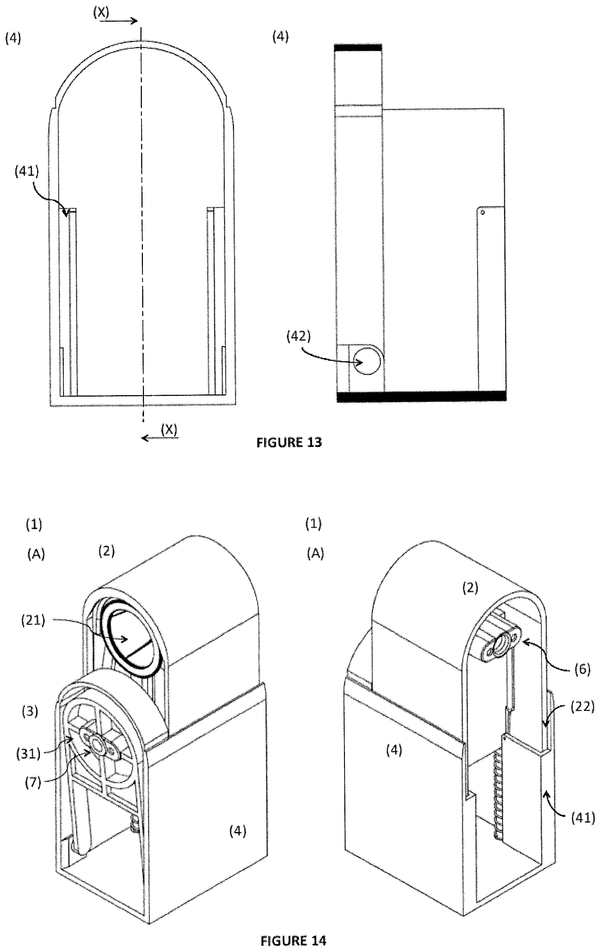

In view of a better visualization of the main elements and constructive aspects, **Figures 8** to **13** represent in isolation the first part (2) - Figures 8 and 9 -, second part (3) - Figures 10 and 11 - and third part (4) - Figures 12 and 13 -, of said first embodiment of an extraction device (1) according to the present invention.

Because said main elements and associated constructive aspects have already been generally described in relation with the previous Figures, it is herewith abdicated of a further description thereof.

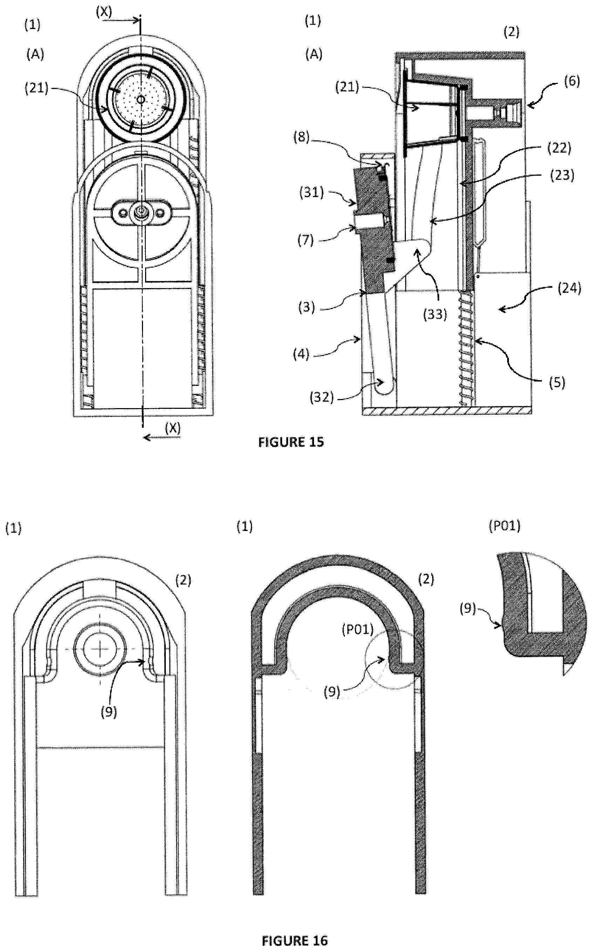

**Figures 14** and **15** represent a second embodiment of an extraction device (1) according to the present invention.

In particular, this second embodiment is characterized in that it presents collection means (21) in a substantially frusto-conic basket-like form, adjusted to the form and dimension of respective single dose portions (10), but keeping the same admission side (20) in relation to the second part (3) and third part (4). Other embodiments can present collection means (21) with other configurations, preferentially adapted to the dimension and form of corresponding single dose portions (10).

Moreover, this embodiment presents the injection means (6) of fluid flow on the side of said first part (2) that is disposed opposite to said admission side (20) of said single dose portions (10). The discharge means (7) are therefore provided on said second part (3), in particular in said closing zone (31) adapted so as to close the space defined by the collection means (21) in a substantially liquid manner.

Moreover, in the case of this embodiment, said third part (4) presents second translation means (41) of bigger dimension, in particular extending along a bigger part of the side faces of said first part (2).

**Figure 16** represents front views of a preferred embodiment of said first part (2) of the extraction group (1) according to the present invention, including a detail (P01) - represented on the right - of a retention element (9) adapted for retention of said single dose portion (10) inside said collection means (21). In particular, said collection means (21) are in this case provided as a semi-closed space configured in a substantially circular half-basket form.

As can be observed, said retention element (9) is provided as a local projection disposed on both sides of said collection means (21), so as to retain a single dose portion (10) inside thereof.

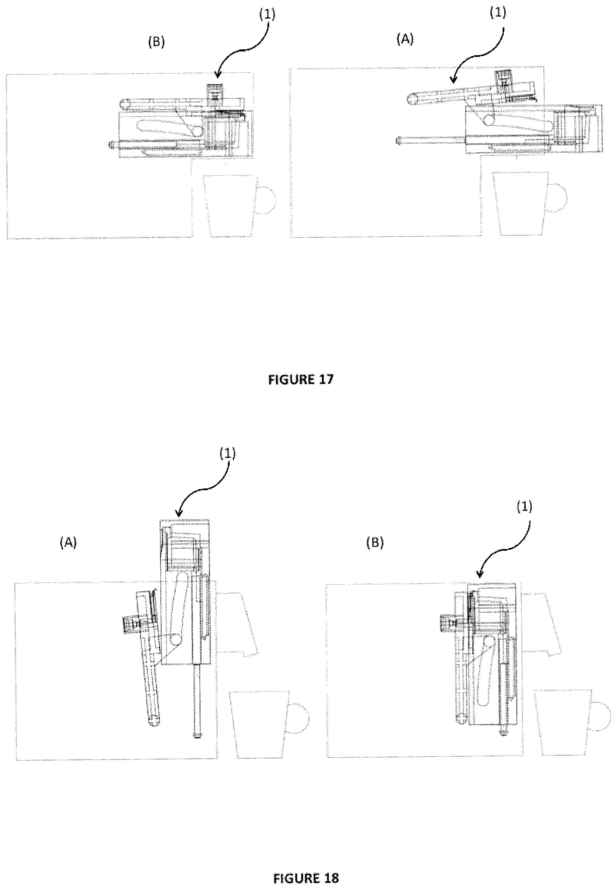

**Figures 17** and **18** represent two preferred embodiments of a machine (11) for preparing beverages presenting an extraction device (1) according to the present invention.

As can be observed, in the case of a first embodiment (Figure 17) said extraction device (1) is generally disposed in a machine (11) for preparing beverages along a substantially horizontal direction of the actuation movement between an open position (A) and a closed position (B). A user can drive said first part parte (2) so that the latter moves outwards, to an open position (A) where one can insert a single dose portion (10) inside thereof, and then drive again said first part (2) in opposite direction, to a closed position (B) where one can start beverage extraction.

In the case of a second embodiment (Figure 18) the extraction device (1) is disposed in a machine (11) so that a respective actuation movement develops along a substantially vertical direction.

## Claims

1. **Extraction device (1)** adapted for collecting single dose portions (10) of single doses of at least one edible substance:
- a first part (2) provided in a general box-like form or similar, adapted so that it can be moved in a translation movement between an open position (A) and a closed position (B), and vice-versa, and presenting collection means (21) disposed at a distal edge zone and configuring a space for collecting one said single dose portion (10) through an admission side (20) of said first part (2),
- a second part (3) provided in a general lid-like form of said admission side (20) of said first part (2), and adapted so that it can be moved in a rotation movement between a non-blocking position (C) corresponding to said open position (A) and a blocking position (D) corresponding to said closed position (B), and vice-versa, and presenting a closing zone (31) adapted for closing of said collection means (21),
- a third part (4) provided in a general framework-like form or similar, so that it can fixedly collect at least part of said first (2) and second part (3),
**characterized**
**in that** said first part (2) presents first translation means (23) that provide paths of engagement for corresponding first engagement means (33) of said second part (3), whereby said paths of engagement are disposed in opposing side faces of said first part (2) and develop in oblique manner relative to the direction of said translation movement, distancing themselves from said admission side (20) of said first part (2) in the direction of the distal region thereof, so as to provide a rotation movement of said second part (3) relative to said first part (2), whereby said rotation movement of said second part (3) develops gradually between said un-blocking position (C) and said blocking position (D) as said translation movement develops between said open position (A) and said closed position (B), and vice-versa.

2. Extraction device (1) according to claim 1, **characterized in that** said first translation means (23) of said first part (2) provide paths of engagement with an inclination of at least 2°, preferentially at least 5°, relative to the longitudinal direction, and are provided between the proximity of said collection means (21) and a proximal zone of said first part (2).

3. Extraction device (1) according to claim 1 or 2, **characterized in that** said first translation means (23) of said first part (2) provide paths of engagement presenting a longitudinal extension bigger than the longitudinal dimension of said collection means (21), so that when said first engagement means (33) of said second part (3) are in a proximal position of said first translation means (23) of said first part (2), the space defined by said collection means (21) is completely beyond the distal edge of said second part (3).

4. Extraction device (1) according to claims 1 to 3, **characterized in that** said first engagement means (33) of said second part (3) are provided as projections, including of cylindrical-type or similar, adapted for mobile engagement in translation, including by means of positive union, with said first translation means (23) that are provided in opposing sides of two interior faces of said first part (2), developing along respective paths of engagement that are provided as openings or cavities, including of a groove type or similar.

5. Extraction device (1) according to claims 1 to 4, **characterized in that** said first engagement means (33) of said second part (3) are generally provided between a distal region comprising said closing means (31) and a proximal region comprising rotation means (32), preferentially in respective applications that project inwards of said first part (2).

6. Extraction device (1) according to any one of previous claims 1 to 5, **characterized in that** said second part (3) presents rotation means (32) adapted so that can be rotated by means of engagement in corresponding rotation means (42) provided in said third part (4), around a common rotation axis disposed in a proximal zone of said extraction device (1), so as to support said rotation movement of said second part (3) relative to said third part (4) between said un-blocking position (C) and said blocking position (D), whereby said rotation means (32) of said second part (3) are preferentially provided in form of projections, preferentially of cylindrical format and **in that** said rotation means (42) of said third part (4) are provided in a cavity type or similar form, preferentially of cylindrical format.

7. Extraction device (1) according to any one of previous claims 1 to 6, **characterized in that** said first part (2) presents second translation means (22) adapted so that can be moved in a translation movement by means of engagement with corresponding second translation means (41) provided in said third part (4), whereby said second translation means (41) are configured in the form of openings or cavities, including in the form of grooves or similar, preferentially of substantially rectangular format.

8. Extraction device (1) according to any one of previous claims 1 to 7, **characterized in that** said first part (2) presents said second translation means (22) in side faces disposed on the side opposite to the admission side of said collection means (21), and developing along the longitudinal direction towards the distal zone of said first part (2).

9. Extraction device (1) according to any one of previous claims 1 to 8, **characterized in that** said third part (4) presents elastic means (5) provided so as to exert an elastic force upon said first part (2) along the longitudinal direction, from the proximal zone towards the distal zone.

10. **Machine (11)** for preparing beverages adapted for extraction of a beverage from a single dose portion (10) and presenting at least one extraction device, said machine (11) including an extraction device (1) according to any of claims 1 to 9, whereby a first part (2) of said extraction device (1) is provided so that can be moved along a draw-like translation movement relative to the machine housing (12) from an open position (A) where it can receive a single dose portion (10) inside thereof, to a closed position (B) where said single dose portion (10) is confined in a substantially liquid tight manner,
**characterized**
**in that** said translation movement of said first part (2) along a longitudinal direction of the extraction device (1) actuates a rotation movement of a second part (3) of the extraction device (1) around a cross axis, so as to block said first part (2) in a blocking position (C) where closing means (31) of said second part (3) close in a substantially tight manner the space defined by collection means (21) of said first part (2) that are adapted for collection of said single dose portion (10).

11. Machine (11) according to claim 10, **characterized in that** comprises fluid flow injection means (6) in said collection means (21) through the distal zone of said first part (2), and beverage discharge means (7) out of said collection means (21) through the distal zone of said second part (3).

12. Machine (11) according to claims 10 or 11, **characterized in that** comprises beverage discharge means (7) in said collection means (21) through the distal zone of said first part (2), and fluid flow injection means (6) through said closing means (31) through the distal zone of said second part (3).

13. **Process** for preparing an edible product, such as for example an aromatic beverage, based upon a single dose portion (10), in an extraction device (1) according to any of claims 1 to 9, including the steps:
- providing a beverage preparation machine (11) including at least one extraction device (1) in an open position (A);
- inserting a single dose portion (10) through an admission side (20) into the collection means (21) of a first part (2) of said extraction device (1);
- exerting a force upon said first part (2) so as to displace it in a translation movement along a longitudinal direction until said first part (2) is closed in a closed position (B) by a second part (3) ;
- as a result of its displacement, said first part (2) actuating said second part (3) in a rotation movement around a cross axis so that the latter approaches the admission side, until closing the space defined by said collection means (21) in a blocking position (C);
- injecting a fluid flow through said first part (2);
- collecting the resulting beverage through said second part (3).

14. Process according to claim 13, **characterized in that** further includes the steps:
- displacing said second part (3) relative to said first part (2) so that blocking means (8) of said second part (3) engage so as to block closing means (31) of said first part (2);
- injecting a fluid flow through said second part (3),
- collecting the resulting beverage through said first part (2).

15. Process according to claims 13 or 14, **characterized in that** further includes the steps:
- displacing said second part (3) relative to said first part (2) so that said blocking means (8) disengage from said closing means (31) and so that a single dose portion (10) passes by said retention elements (9) of said first part (2), thereby exiting the space defined by said collection means (21) and out of said extraction device (1).

## Patentansprüche

1. Extrahierungsvorrichtung (1), die dazu angepasst ist, Einzeldosisabschnitte (10) einzelner Dosen zumindest einer verzehrbaren Substanz aufzufangen:
- ein erstes Teil (2), welches in einer allgemeinen Kasten-ähnlichen Form oder dergleichen bereitgestellt ist, so angepasst ist, dass es in einer Translationsbewegung zwischen einer offenen Position (A) und einer geschlossenen Position (B) und umgekehrt bewegt werden kann, und eine Auffangeinrichtung (21) bietet, die an distalen Randzone angeordnet ist und einen Raum zum Auffangen eines Einzeldosisabschnittes (10) durch eine Zufuhrseite (20) des ersten Teils (2) hindurch ausbildet,
- ein zweites Teil (3), welches in einer allgemeinen Deckel-ähnlichen Form auf der Zufuhrseite (20) des ersten Teils (2) bereitgestellt ist und so angepasst ist, dass es in einer Drehbewegung zwischen einer nicht blockierenden Position (C), die der offenen Position (A) entspricht, und einer blockierenden Position (D), die der geschlossenen Position (B) entspricht, und umgekehrt bewegt werden kann, und eine geschlossene Zone (31) bietet, die dazu angepasst ist, die Auffangeinrichtung (21) zu schließen,
- ein drittes Teil (4), welches in einer allgemeinen Rahmen-ähnlichen Form oder dergleichen bereitgestellt ist, so dass es zumindest teilweise das erste Teil (2) und zweite Teil (3) fest auffangen kann,
**dadurch gekennzeichnet, dass** das erste Teil (2) eine erste Translationseinrichtung (23) bietet, die Ineingriffnahmewege für eine entsprechende erste Ineingriffnahmeeinrichtung (33) des zweiten Teils (3) bereitstellt, wobei die Ineingriffnahmewege in gegenüberliegenden Seitenflächen des ersten Teils (2) angeordnet sind und sich auf schräge Weise relativ zu der Richtung der Translationsbewegung entwickeln, wobei sich dieselben von der Zufuhrseite (20) des ersten Teils (2) in der Richtung des distalen Bereiches davon entfernen, um eine Drehbewegung des zweiten Teils (3) relativ zu dem ersten Teil (2) bereitzustellen, wobei sich die Drehbewegung des zweiten Teils (3) schrittweise zwischen der nicht blockierenden Position (C) und der blockierenden Position (D) entwickelt, während sich die Translationsbewegung zwischen der offenen Position (A) und der geschlossenen Position (B) entwickelt, und umgekehrt.

2. Extrahierungsvorrichtung (1) gemäß Anspruch 1, **dadurch gekennzeichnet, dass** die erste Translationseinrichtung (23) des ersten Teils (2) Ineingriffnahmewege mit einer Neigung von zumindest 2°, vorzugsweise zumindest 5°, relativ zu der Längsrichtung bereitstellt und zwischen der Nähe der Auffangeinrichtung (21) und einer nahen Zone des ersten Teils (2) bereitgestellt ist.

3. Extrahierungsvorrichtung (1) gemäß Anspruch 1 oder 2, **dadurch gekennzeichnet, dass** die erste Translationseinrichtung (23) des ersten Teils (2) Ineingriffnahmewege bereitstellt, die eine Längserstreckung bieten, welche größer ist als die Längsabmessung der Auffangeinrichtung (21), so dass dann, wenn die erste Ineingriffnahmeeinrichtung (33) des zweiten Teils (3) in einer nahen Position zu der ersten Translationseinrichtung (23) des ersten Teils (2) ist, der durch die Auffangeinrichtung (21) definierte Raum vollständig jenseits des distalen Randes des zweiten Teils (3) ist.

4. Extrahierungsvorrichtung (1) gemäß einem der Ansprüche 1 bis 3, **dadurch gekennzeichnet, dass** die erste Ineingriffnahmeeinrichtung (33) des zweiten Teils (3) als Vorsprünge bereitgestellt ist, einschließlich zylindrischer Art oder dergleichen, die für eine mobile Ineingriffnahme während der Translation, einschließlich mittels positiver Vereinigung, mit der ersten Translationseinrichtung (23) angepasst sind, welche in gegenüberliegenden Seiten von zwei Innenflächen des ersten Teils (2) angeordnet ist, wobei sich dieselben entlang jeweiliger Ineingriffnahmewege erstrecken, die als Öffnungen oder Hohlräume bereitgestellt sind, einschließlich einer Rillenart oder dergleichen.

5. Extrahierungsvorrichtung (1) gemäß einem der Ansprüche 1 bis 4, **dadurch gekennzeichnet, dass** die erste Ineingriffnahmeeinrichtung (33) des zweiten Teils (3) im Allgemeinen zwischen einem distalen Bereich, der die Verschlusseinrichtung (31) aufweist, und einem nahen Bereich, der die Dreheinrichtung (32) aufweist, bereitgestellt ist, vorzugsweise in entsprechenden Applikationen, die von dem ersten Teil (2) nach innen hervorstehen.

6. Extrahierungsvorrichtung (1) gemäß einem der vorhergehenden Ansprüche 1 bis 5, **dadurch gekennzeichnet, dass** das zweite Teil (3) eine Dreheinrichtung (32) bietet, die so angepasst ist, dass sie mittels einer Ineingriffnahme in einer entsprechenden Dreheinrichtung (42), die in dem dritten Teil (4) bereitgestellt ist, um eine gemeinsame Drehachse gedreht werden kann, die in einer nahen Zone der Extrahierungsvorrichtung (1) angeordnet ist, um die Drehbewegung des zweiten Teils (3) relativ zu dem dritten Teil (4) zwischen der nicht blockierenden Position (C) und der blockierenden Position (D) zu unterstützen, wobei die Dreheinrichtung (32) des zweiten Teils (3) vorzugsweise in der Form von Vorsprüngen, vorzugsweise in zylindrischem Format, bereitgestellt ist, und dadurch, dass die Dreheinrichtung (42) des dritten Teils (4) in einer Hohlraumart oder einer ähnlichen Form, vorzugwiese in zylindrischem Format, bereitgestellt ist.

7. Extrahierungsvorrichtung (1) gemäß einem der vorhergehenden Ansprüche 1 bis 6, **dadurch gekennzeichnet, dass** das erste Teil (2) eine zweite Translationseinrichtung (22) bietet, die so angepasst ist, dass sie in einer Translationsbewegung mittels einer Ineingriffnahme mit einer entsprechenden zweiten Translationseinrichtung (41), die in dem dritten Teil (4) bereitgestellt ist, bewegt werden kann, wobei die zweite Translationseinrichtung (41) in der Form von Öffnungen oder Hohlräumen, einschließlich der Form von Rillen oder dergleichen, vorzugsweise im Wesentlichen im rechteckigen Format, ausgebildet ist.

8. Extrahierungsvorrichtung (1) gemäß einem der vorhergehenden Ansprüche 1 bis 7, **dadurch gekennzeichnet, dass** das erste Teil (2) die zweite Translationseinrichtung (22) in Seitenoberflächen bietet, die auf der Seite gegenüber der Zufuhrseite der Auffangeinrichtung (21) angeordnet sind, wobei sich dieselbe entlang der Längsrichtung zu der distalen Zone des ersten Teils (2) hin entwickelt.

9. Extrahierungsvorrichtung (1) gemäß einem der vorhergehenden Ansprüche 1 bis 8, **dadurch gekennzeichnet, dass** das dritte Teil (4) eine elastische Einrichtung (5) bietet, die bereitgestellt ist, um auf das erste Teil (2) eine elastische Kraft entlang der Längsrichtung von der proximalen Zone zu der distalen Zone hin auszuüben.

10. Maschine (11) zum Zubereiten von Getränken, die zum Extrahieren eines Getränkes aus einem Einzeldosisabschnitt (10) angepasst ist und zumindest eine Extrahierungsvorrichtung bietet, wobei die Maschine (11) eine Extrahierungsvorrichtung (1) gemäß einem der Ansprüche 1 bis 9 umfasst, wobei ein erstes Teil (2) der Extrahierungsvorrichtung (1) so bereitgestellt ist, dass es entlang einer zugähnlichen Translationsbewegung relativ zu dem Maschinengehäuse (12) aus einer offenen Position (A), wo es in sich einen Einzeldosisabschnitt (10) davon empfangen kann, zu einer geschlossenen Position (B) bewegt werden kann, wo der Einzeldosisabschnitt (10) auf eine im Wesentlichen flüssigkeitsdichte Art eingeschlossen ist,
**dadurch gekennzeichnet, dass** die Translationsbewegung des ersten Teils (2) entlang einer Längsrichtung der Extrahierungsvorrichtung (1) eine Drehbewegung eines zweiten Teils (3) der Extrahierungsvorrichtung (1) um eine Querachse bewirkt, um das erste Teil (2) in einer Blockierposition (C) zu blockieren, wo eine Verschlusseinrichtung (31) des zweiten Teils (3) den Raum, der durch die zur Sammlung des Einzeldosisabschnittes (10) angepasste Auffangeinrichtung (21) des ersten Teils (2) definiert wird, auf eine im Wesentlichen dichte Weise verschließt.

11. Maschine (11) gemäß Anspruch 10, **dadurch gekennzeichnet, dass** diese eine Fluidstromeinspritzeinrichtung (6) in der Auffangeinrichtung (21) durch die distale Zone des ersten Teils (2) hindurch sowie eine Getränkeausgabeeinrichtung (7) aus der Auffangeinrichtung (21) durch die distale Zone des zweiten Teils (3) hindurch aufweist.

12. Maschine (11) gemäß Anspruch 10 oder 11, **dadurch gekennzeichnet, dass** die Getränkeausgabeeinrichtung (7) in der Auffangeinrichtung (21) durch die distale Zone des ersten Teils (2) und die Fluidströmungseinspritzeinrichtung (6) durch die Verschlusseinrichtung (31) durch die distale Zone des zweiten Teils (3) aufweist.

13. Prozess zum Zubereiten eines verzehrbaren Produktes, beispielsweise eines aromatischen Getränkes, basierend auf einem Einzeldosisabschnitt (10), in einer Extrahierungsvorrichtung (1) gemäß einem der Ansprüche 1 bis 9, der die folgenden Schritte umfasst:
- Bereitstellen einer Getränkezubereitungsmaschine (11), die zumindest eine Extrahierungsvorrichtung (1) in einer offenen Position (A) umfasst;
- Einfügen eines Einzeldosisabschnittes (10) durch eine Zufuhrseite (20) in die Auffangeinrichtung (21) eines ersten Teils (2) der Extrahierungsvorrichtung (1);
- Anwenden, durch ein zweites Teil (3), einer Kraft auf das erste Teil (2), um es in einer Translationsbewegung entlang einer Längsrichtung zu verschieben, bis das erste Teil (2) in einer geschlossenen Position (B) ist;
- wobei das erste Teil (2) als Folge der Verschiebung das zweite Teil (3) in eine Drehbewegung um eine erste Querachse versetzt, so dass sich Letzteres an die Zufuhrseite annähert, bis es den durch die Auffangeinrichtung (21) definierten Raum in einer Blockierposition (C) schließt;
- Einspritzen eines Fluidstromes durch das erste Teil (2);
- Auffangen des resultierenden Getränkes durch das zweite Teil (3).

14. Prozess gemäß Anspruch 13, **dadurch gekennzeichnet, dass** dieser ferner die folgenden Schritte umfasst:
- Verschieben des zweiten Teils (3) relativ zu dem ersten Teil (2), so dass eine Blockiereinrichtung (8) des zweiten Teils (3) in Eingriff tritt, um eine Verschlusseinrichtung (31) des ersten Teils (2) zu blockieren;
- Einspritzen eines Fluidstromes durch das zweite Teil (3),
- Auffangen des resultierenden Getränkes durch das erste Teil (2).

15. Prozess gemäß Anspruch 13 oder 14, **dadurch gekennzeichnet, dass** dieser ferner die folgenden Schritte umfasst:
- Verschieben des zweiten Teils (3) relativ zu dem ersten Teil (2), so dass sich die Blockiereinrichtung (8) von der Verschlusseinrichtung (31) löst und ein Einzeldosisabschnitt (10) entlang der Zurückhaltungselemente (9) des ersten Teils (2) verläuft, wodurch dieser den durch die Auffangeinrichtung (21) definierten Raum verlässt und aus der Extrahierungsvorrichtung (1) heraus austritt.

## Revendications

1. Dispositif d'extraction (1) adapté pour collecter des portions (10) de doses individuelles d'au moins une substance comestible:
- une première partie (2) prévue généralement en forme de boîte ou autre, adaptée de sorte qu'elle puisse être déplacée selon un mouvement de translation entre une position ouverte (A) et une position fermée (B), et inversement, et présentant des moyens de collecte (21) disposés dans une zone de bord distal et configurant un espace pour collecter une dite portion de dose individuelle (10) à travers un côté d'admission (20) de ladite première partie (2),
- une deuxième partie (3) prévue généralement en forme de couvercle dudit côté d'admission (20) de ladite première partie (2) et adaptée de sorte qu'elle puisse être déplacée selon un mouvement de rotation entre une position de non-blocage (C) correspondant à ladite position ouverte (A) et à une position de blocage (D) correspondant à ladite position fermée (B), et inversement, et présentant une zone de fermeture (31) adaptée pour fermer lesdits moyens de collecte (21),
- une troisième partie (4) prévue généralement en forme de cadre ou autre, de sorte qu'elle puisse collecter de manière fixe au moins une portion de ladite première (2) et de ladite deuxième partie (3),
**caractérisé par le fait**
**que** ladite première partie (2) présente des premiers moyens de translation (23) qui créent des trajets de venue en prise pour des premiers moyens de venue en prise correspondants (33) de ladite deuxième partie (3), où lesdits trajets de venue en prise sont disposés dans des faces latérales opposées de ladite première partie (2) et s'étendent en oblique par rapport à la direction dudit mouvement de translation, en s'éloignant dudit côté d'admission (20) de ladite première partie (2) dans la direction de sa région distale, de manière à permettre un mouvement de rotation de ladite deuxième partie (3) par rapport à ladite première partie (2), où ledit mouvement de rotation de ladite deuxième partie (3) s'étend progressivement entre ladite position de non-blocage (C) et ladite position de blocage (D) au fur et à mesure que ledit mouvement de translation s'étend entre ladite position ouverte (A) et ladite position fermée (B), et inversement.

2. Dispositif d'extraction (1) selon la revendication 1, **caractérisé par le fait que** lesdits premiers moyens de translation (23) de ladite première partie (2) créent des trajets de venue en prise avec une inclinaison d'au moins 2°, préférentiellement d'au moins 5°, par rapport à la direction longitudinale, et sont prévus entre la proximité desdits moyens de collecte (21) et une zone proximale de ladite première partie (2).

3. Dispositif d'extraction (1) selon la revendication 1 ou 2, **caractérisé par le fait que** lesdits premiers moyens de translation (23) de ladite première partie (2) créent des trajets de venue en prise présentant une extension longitudinale plus grande que la dimension longitudinale desdits moyens de collecte (21), de sorte que, lorsque lesdits premiers moyens de venue en prise (33) de ladite deuxième partie (3) se trouvent à une position proximale desdits premiers moyens de translation (23) de ladite première partie (2), l'espace défini par lesdits moyens de collecte (21) se trouve entièrement au-delà du bord distal de ladite deuxième partie (3).

4. Dispositif d'extraction (1) selon les revendications 1 à 3, **caractérisé par le fait que** lesdits premiers moyens de venue en prise (33) de ladite deuxième partie (3) sont prévus en forme de saillies, y compris de type cylindrique ou autre, adaptées pour une venue en prise mobile en translation, y compris au moyen d'une union positive, avec lesdits premiers moyens de translation (23) qui sont prévus dans des côtés opposés de deux faces intérieures de ladite première partie (2), s'étendant le long de trajets de venue en prise respectifs prévus sous forme d'ouvertures ou de cavités, y compris de type rainure ou autre.

5. Dispositif d'extraction (1) selon les revendications 1 à 4, **caractérisé par le fait que** lesdits premiers moyens de venue en prise (33) de ladite deuxième partie (3) sont généralement prévus entre une région distale comprenant lesdits moyens de fermeture (31) et une région proximale comprenant des moyens de rotation (32), de préférence dans des applications respectives qui font saillie vers l'intérieur de ladite première partie (2).

6. Dispositif d'extraction (1) selon l'une quelconque des revendications précédentes 1 à 5, **caractérisé par le fait que** ladite deuxième partie (3) présente des moyens de rotation (32) adaptés de manière à pouvoir être entraînés en rotation au moyen d'une venue en prise dans des moyens de rotation correspondants (42) prévus dans ladite troisième partie (4), autour d'un axe de rotation commun disposé dans une zone proximale dudit dispositif d'extraction (1), de manière à supporter ledit mouvement de rotation de ladite deuxième partie (3) par rapport à ladite troisième partie (4) entre ladite position de non-blocage (C) et ladite position de blocage (D), où les moyens de rotation (32) de ladite deuxième partie (3) sont prévus de préférence sous forme de saillies, de préférence de forme cylindrique, et que lesdits moyens de rotation (42) de ladite troisième partie (4) sont prévus sous forme de type cavité ou autre, de préférence de forme cylindrique.

7. Dispositif d'extraction (1) selon l'une quelconque des revendications précédentes 1 à 6, **caractérisé par le fait que** ladite première partie (2) présente des deuxièmes moyens de translation (22) adaptés de sorte qu'ils puissent être déplacés selon un mouvement de translation au moyen d'une venue en prise avec des deuxièmes moyens de translation (41) prévus dans ladite troisième partie (4), où lesdits deuxièmes moyens de translation (41) sont configurés sous forme d'ouvertures ou de cavités, y compris sous forme de rainures ou autres, de préférence de forme sensiblement rectangulaire.

8. Dispositif d'extraction (1) selon l'une quelconque des revendications précédentes 1 à 7, **caractérisé par le fait que** ladite première partie (2) présente lesdits deuxièmes moyens de translation (22) dans des faces latérales disposées du côté opposé au côté d'admission desdits moyens de collecte (21), et s'étendant dans la direction longitudinale vers la zone distale de ladite première partie (2).

9. Dispositif d'extraction (1) selon l'une quelconque des revendications précédentes 1 à 8, **caractérisé par le fait que** ladite troisième partie (4) présente des moyens élastiques (5) prévus de manière à exercer une force élastique sur ladite première partie (2) dans la direction longitudinale, de la zone proximale vers la zone distale.

10. Machine (11) pour préparer des boissons adaptée pour extraire une boisson d'une portion de dose individuelle (10) et présentant au moins un dispositif d'extraction, ladite machine (11) comportant un dispositif d'extraction (1) selon l'une quelconque des revendications 1 à 9, dans laquelle une première partie (2) dudit dispositif d'extraction (1) est prévue de sorte qu'elle puisse être déplacée selon un mouvement de translation de type traction par rapport au carter de la machine (12) d'une position ouverte (A), dans laquelle elle peut recevoir une portion de dose individuelle (10) en son intérieur, vers une position fermée (B) dans laquelle ladite portion de dose individuelle (10) est confinée de manière sensiblement étanche aux liquides,
**caractérisée par le fait**
**que** ledit mouvement de translation de ladite première partie (2) dans une direction longitudinale du dispositif d'extraction (1) actionne un mouvement de rotation d'une deuxième partie (3) du dispositif d'extraction (1) autour d'un axe transversal, de manière à bloquer ladite première partie (2) dans une position de blocage (C) dans laquelle les moyens de fermeture (31) de ladite deuxième partie (3) ferment de manière sensiblement étanche l'espace défini par les moyens de collecte (21) de ladite première partie (2) qui sont adaptés pour la collecte de ladite portion de dose individuelle (10).

11. Machine (11) selon la revendication 10, **caractérisée par le fait qu'**elle comprend des moyens d'injection de flux de fluide (6) dans lesdits moyens de collecte (21) à travers la zone distale de ladite première partie (2), et des moyens d'évacuation de boisson (7) hors desdits moyens de collecte (21) à travers la zone distale de ladite deuxième partie (3).

12. Machine (11) selon les revendications 10 ou 11, **caractérisée par le fait qu'**elle comprend des moyens d'évacuation de boisson (7) dans lesdits moyens de collecte (21) à travers la zone distale de ladite première partie (2), et des moyens d'injection de flux de fluide (6) à travers lesdits moyens de fermeture (31) à travers la zone distale de ladite deuxième partie (3).

13. Procédé de préparation d'un produit comestible, tel que par exemple une boisson aromatique, à base d'une portion de dose individuelle (10), dans un dispositif d'extraction (1) selon l'une quelconque des revendications 1 à 9, comprenant les étapes consistant à:
- prévoir une machine de préparation de boisson (11) comportant au moins un dispositif d'extraction (1) dans une position ouverte (A);
- insérer une portion de dose individuelle (10) à travers un côté d'admission (20) dans les moyens de collecte (21) d'une première partie (2) dudit dispositif d'extraction (1);
- exercer une force sur ladite première partie (2) de manière à la déplacer selon un mouvement de translation dans une direction longitudinale jusqu'à ce que ladite première partie (2) soit fermée dans une position fermée (B) par une deuxième partie (3);
- du fait de son déplacement, actionner, par ladite première partie (2), ladite deuxième partie (3) selon un mouvement de rotation autour d'un axe transversal de sorte que cette dernière se rapproche du côté d'admission, jusqu'à fermer l'espace défini par lesdits moyens de collecte (21) dans une position de blocage (C);
- injecter un flux de fluide à travers ladite première partie (2);
- collecter la boisson résultante à travers ladite deuxième partie (3).

14. Procédé selon la revendication 13, **caractérisé par le fait qu'**il comprend par ailleurs les étapes consistant à:
- déplacer ladite deuxième partie (3) par rapport à ladite première partie (2) de sorte que les moyens de blocage (8) de ladite deuxième partie (3) viennent en prise de manière à bloquer les moyens de fermeture (31) de ladite première partie (2);
- injecter un flux de fluide à travers ladite deuxième partie (3),
- collecter la boisson résultante à travers ladite première partie (2).

15. Procédé selon les revendications 13 ou 14, **caractérisé par le fait qu'**il comprend par ailleurs les étapes consistant à:
- déplacer ladite deuxième partie (3) par rapport à ladite première partie (2) de sorte que lesdits moyens de blocage (8) se dégagent desdits moyens de fermeture (31) et de sorte qu'une portion de dose individuelle (10) passe par lesdits éléments de retenue (9) de ladite première partie (2), sortant ainsi de l'espace défini par lesdits moyens de collecte (21) et hors dudit dispositif d'extraction (1).
